# EUROPÄISCHE PATENTSCHRIFT

(11) **EP 0 406 213 B1**
(45) Veröffentlichungstag und Bekanntmachung des Hinweises auf die Patenterteilung: **08.09.1993**
(21) Anmeldenummer: 90890115.0
(22) Anmeldetag: 12.04.1990
(51) Int. Cl.: A21D 8/06

(54) **Verfahren zur Herstellung von haltbaren Backwaren**
Process for the production of preservable bakery products
Procédé de préparation de produits de boulangerie conservables

(30) Priorität: 30.06.1989 AT 1614/89; 17.08.1989 AT 1955/89
(43) Veröffentlichungstag der Anmeldung: 02.01.1991
(73) Patentinhaber: H. Bahlsens Keksfabrik KG, D-30655 Hannover (DE)
(72) Erfinder: Köckenbauer, Manfred, A-2700 Wiener Neustadt (AT)

(56) Entgegenhaltungen:
- EP-A- 0 209 729
- AT-A- 338 719
- DE-C- 854 932
- FR-E- 62 261
- GB-A- 1 020 270
- US-A- 1 680 898

## Beschreibung

Die Erfindung betrifft ein Verfahren zur Herstellung von haltbaren Backwaren aus einer gerührten oder aufgeschlagenen Kuchenmasse, bei dem eine Backform aus Glas oder Keramik mit der Masse zu etwa 80 % gefüllt wird, darauf die Backform mit einem Deckel verschlossen wird, die Masse sodann einer Erwärmung unterzogen wird, wobei die dabei entstehenden Gase entweichen gelassen werden, darauf die Masse abkühlen gelassen wird, wobei im Inneren der Backform ein Unterdruck entsteht.

Aus der AT-PS 338 719 ist ein Verfahren zum Haltbarmachen von Brot und Backwaren bekannt, bei dem die Backwaren in einem Gefäß vorgebacken werden, sodann ein Deckel, der mit einer Spange gesichert ist, aufgesetzt wird, und dann der Backvorgang fortgesetzt wird.

Es hat sich in der Praxis herausgestellt, daß mit einem solchen Verfahren keineswegs die Haltbarkeit der hergestellten Backwaren gesichert ist. Wesentlich ist für die Haltbarkeit der Aktivwasserwert des fertigen Produktes. Weiters ist es bei diesem Verfahren nachteilig, daß das bereits erhitzte Gefäß aus dem Ofen entnommen werden muß und der Manipulation des Verschließens unterzogen werden muß. Der mit einer Spange gehaltene Deckel erweist sich dabei als relativ teure und umständliche Lösung.

Aus der US-A 4,590,078 ist weiters ein Verfahren bekannt, mit dem Backwaren in flachen Blechbehältern hergestellt werden können. Als wesentliches Problem wird dabei erachtet, daß das Entweichen der beim Backen entstehenden Gase sichergestellt wird. Es werden dabei spezielle Belüftungskanäle vorgeschlagen, um diese Gase von der Mitte zum Rand des Deckels zu leiten. Nach dem Backen wird der Behälter luftdicht verschlossen, um eine Konservierung zu ermöglichen. Bedingt durch den Behälterwerkstoff können unerwünschte Veränderungen des Geschmackes auftreten, die im Extremfall zu einer völligen Ungenießbarkeit des Backgutes führen können. Weiters wurde festgestellt, daß schon geringe äußere Verformungen, wie z.B. Dellen, optisch nicht oder nur schwer sichtbare Haarrisse verursachen können, die zu einer eingeschränkten Haltbarkeit und zum vorzeitigen Verderb durch Luftzutritt führen können.

Beiden bekannten Verfahren ist gemeinsam, daß das endgültige Verschließen der Backform oder des Behälters entweder zwischen zwei Erhitzungsschritten oder unmittelbar nach der Erhitzung erfolgt. Dies bedeutet, daß das heiße Gefäß manipuliert werden muß. Dies ist umständlich und bringt beim Aufsetzen eines kalten Deckels auf das heisse Gefäß Probleme mit Wärmespannungen und der Dichtheit des Deckels.

Aufgabe der Erfindung ist es, diese Nachteile zu vermeiden und ein Verfahren zu schaffen, das es erlaubt, bei möglichst einfacher und kostengünstiger Durchführung wohlschmeckende Backwaren herzustellen, die ohne dem Zusatz von Konservierungsmitteln lange haltbar sind.

Erfindungsgemäß ist daher vorgesehen, daß der gesamte Vorgang des Erwärmens bei verschlossenem Deckel erfolgt, und daß der Unterdruck durch die Abkühlung des Backgutes entsteht, wodurch ohne weiteres Zutun ein luftdichter Verschluß des Deckels erzielt wird und daß durch die Rezeptur der Backwaren und die Dauer und Temperatur der Erwärmung die Wasseraktivität des fertigen Produktes auf einem Wert zwischen 0,5 und 0,9, vorzugsweise zwischen 0,75 und 0,85 gehalten wird.

Der Deckel sitzt während der Erwärmung undicht auf der Backform auf. Wesentlich ist bei der Erfindung, daß das Verfahren einstufig ist, das heißt, die Backform braucht nach dem Einführen in den Ofen keiner Manipulation zum Zweck des Verschließens oder Vakuumversiegelns mehr unterzogen werden.

Das erfindungsgemäße Verfahren führt zu besonders wohlschmeckenden Backwaren, wenn die verwendete Backform ein Verhältnis von Volumen zu Oberfläche von 0,75 bis 2,5 cm und vorzugsweise von 1 bis 1,5 cm aufweist. Dieses Verhältnis wird berechnet, indem man den Inhalt der Backform in ml, d.h. in cm³ ausmißt und durch die Oberfläche, ausgedrückt in cm² dividiert. Der Deckel wird bei der Berechnung der Oberfläche mit berücksichtigt. Dieses Verhältnis stellt ein Maß für die mittlere Dicke der erzeugten Backwaren dar. Es hat sich herausgestellt, daß es bei niedrigen Werten für das Volumen/Oberflächen-Verhältnis, bedingt durch die leichter erzielbare notwendige Kerntemperatur, die das Verdampfen der ungebundenen Feuchtigkeit bewirkt, leichter ist, den entsprechenden Aktivwasserwert des Endproduktes zuverlässig vorherzubestimmen. Auch kann man so die zu einer zuverlässigen Hitzekonservierung notwendige Kerntemperatur ausreichend lange halten. Bei einem Verhältnis über 2,5 kann es auch bei einem sorgfältig geführten Backprozeß vorkommen, daß die Backwaren, bedingt durch unvermeidbare Schwankungen der verschiedenen Parameter, die Kerntemperatur nicht oder nicht ausreichend lange erreichen und daß die Hitzekonservierung und die Verdampfung der ungebundenen Feuchte nicht entsprechend erfolgt.

Wird das Volumen/Oberflächen-Verhältnis jedoch zu niedrig gewählt, steigen die Kosten für die Backform im Verhältnis zum Inhalt so stark an, daß das Verfahren unwirtschaftlich wird.

Es ist besonders günstig, wenn die Erwärmung auf eine maximale Temperatur von 150°C bis 190°C erfolgt und 35 bis 70 Minuten dauert. Je niedriger das Verhältnis von Volumen zu Oberfläche ist, um so höher kann die Temperatur gewählt werden. Damit sinkt auch die erforderliche Dauer der Erwärmung.

Den heutigen Anforderungen der Konsumenten nach natürlichen und unverfälschten Produkten kann besonders entsprochen werden, wenn die Kuchenmasse frei von Konservierungsmitteln ist.

Die bis zur Backfertigkeit vorbereitete gerührte oder aufgeschlagene Kuchenmasse muß so beschaffen sein, daß nach dem Backvorgang aufgrund des Backverlustes eine Wasseraktivität von weniger als 0,9 erreicht wird. Dadurch wird den Mikroben das für ihre Lebensvorgänge notwendige Wasser entzogen. Außerdem werden chemische Reaktionen, wie etwa Hydrolysen hintangehalten. Eine Untergrenze von 0,5 für den Aktivwasserwert ist aus geschmacklichen Gründen vorzusehen. Im optimalen Fall liegt der Aktivwasserwert des fertigen Produktes zwischen 0,75 und 0,85. Der Aktivwasserwert des fertigen Produktes ist für jede Rezeptur gesondert zu errechnen und im Anschluß durch Versuche zu überprüfen und durch entsprechende Veränderungen an dieser Rezeptur einstellbar. Er hängt nicht nur von dem Entweichen der ungebundenen Feuchtigkeit während des Backvorganges ab, sondern auch vom Zucker-, Stärke- und Trockensubstanzanteil ab, da beispielsweise Zucker hygroskopisch ist und Wasser zu binden vermag.

Die Erfindung betrifft weiters eine Backform gemäß Anspruch 5 zur Durchführung des oben beschriebenen Verfahren. Durch die besondere Ausgestaltung des Deckels kann der selbsttätige Verschluß der Backform auf einfache Art erreicht werden.

Nach einer anderen Ausführungsvariante der Erfindung kann vorgesehen sein, daß der Deckel ein Rückschlagventil trägt, das nach außen hin öffnet. In diesem Fall kann der Deckel bereits nach dem Einfüllen der Kuchenmasse luftdicht verschlossen werden. Die Gase, die beim Backen entstehen, entweichen dann durch das Ventil.

Besonders vorteilhaft ist es, wenn unterhalb des Wulstes eine Schulter vorgesehen ist, sodaß die Backform in einer passenden Öffnung gehalten werden kann. Auf diese Weise wird der Transport der Backwaren bzw. der leeren Backformen wesentlich erleichtert, da die Backformen in Kisten transportiert werden können, die Einsätze mit kreisförmigen Ausnehmungen aufweisen. Die Backformen liegen dann am Rand dieser Ausnehmungen auf, wobei ihr Schwerpunkt unterhalb der Ebene des Einsatzes liegt. Auf diese Weise ist ein äußerst sicherer Transport möglich.

Es ist besonders vorteilhaft, wenn als Werkstoff ein recyclingfähiges Glas mit einem niedrigen Borgehalt vorgesehen ist. Als Werkstoff für die Backform ist insbesonders Industrieglas der Hydr. Klasse 3, beispielsweise Natronkalkglas mit einer Ausdehnungszahl von weniger als 92 vorgesehen. Diese sind im Gegensatz zu Spezialgläsern, die Borsäure enthalten voll recyclingfähig. Es kann bei der Verwendung von mindestens 2 mm dickem Industrieglas eine ausreichende Festigkeit erreicht werden kann. Solche Backformen überstehen sowohl die thermische Beanspruchung des Backvorganges als auch den Transport mit den unvermeidlichen Stößen. Durch die inerte Oberfläche von Glas kann jegliche chemische Reaktion mit dem Backgut sowohl während des Backvorganges als auch während der anschließenden Lagerung ausgeschlossen werden. Außerdem ist sowohl ein diffundierender Lufteintritt als auch die Abgabe von Weichmachern, wie bei Kunststoffen, auszuschließen. Dieser Werkstoff ist für den Verwendungszweck eines Back-, Lager-, Aufbewahrungs- und Präsentationsbehälters in Gegensatz zu fast allen anderen bekannten Werkstoffen als garantiert hygienisch unbedenklich zu erachten. Insbesonders Kunststoffe sind mit dem Werkstoff Glas nicht vergleichbar und erweisen sich als schwer zu entsorgen und teilweise nicht wiederverwendbar.

Auf diese Weise wird erreicht, daß die in der Backform hergestellten Backwaren entsprechend ihrer Beschaffenheit zumindest 12 Monate in nahezu ofenfrischem und geschmacklich unverändertem Zustand gehalten werden können. Die erfindungsgemäße Backform hat folgende Vorteile und Verwendungsmöglichkeiten:
- Hitzebeständige Backform
- Verpackungsmaterial
- Transport- und Verkaufsbehältnis
- Aufbewahrungs- und Repräsentationsbehältnis bis zur Konsumation und allfälligen Wiederverwendung als Funktions- oder Dekorobjekt durch den Verbraucher
- Hygienische Unbedenklichkeit
- Recyclingfähigkeit
- Gasundurchlässigkeit
- Korrosionsunanfälligkeit
- Sterilität
- Unanfälligkeit zu chemischen Reaktionen mit dem Backgut
- Inerte Innenfläche
- Sichtbarkeit des Kuchens zur Qualitätskontrolle Vermeidung weiterer schwer- oder nicht wiederverwendbarer Verpackungsmaterialien, wie z.B. PVC
- Wiederverwendung durch den Backwarenhersteller ähnlich einem Pfandflaschensystem.

Die Erfindung betrifft weiters die Verwendung einer Backform aus einem hitzebeständigen Glas, wie sie oben beschrieben ist als Verpackung, sowie als Transport- und Verkaufsbehälter, wobei die Backform einer Wiederverwendung, vorzugsweise im Pfandsystem unterzogen werden kann. Durch die besonderen technischen Merkmale der erfindungsgemäßen Backform ist es erstmals möglich eine Wiederverwendung der Verkaufsbehältnisse in der Praxis durchzuführen. Dies stellt eine Möglichkeit dar, beträchtliche mengen an Hausmüll zu vermeiden.

Im folgenden wird das erfindungsgemäße Verfahren durch Beispiele näher erläutert.

### Beispiel 1

Die backfertige Masse, die man alleine schon wegen des typischen Kuchencharakters nicht durch Ansäuerung und die dadurch bedingte Absenkung des pH-Wertes konservieren kann, ohne diesen typischen Kuchencharakter - und geschmacksentscheidend zu seinem Nachteil verändern, wird so gewählt, daß nach dem Backverlust des Backvorganges eine Wasseraktivität des Endproduktes zwischen 0,5 und 0,9 erreicht wird. Auf diese Weise wird ohne künstliche und chemische Konservierungsmittel sowohl die Keimzahl auf Plate Count-Agar, bezogen auf 1 g unter 100 gehalten, als auch die Anzahl sulfitreduzierender anaerober Keime auf SPS-Agar, bezogen auf 1 g unter 10 gehalten. Die Bildung und Vermehrung von nachweisbaren Clostridien wird ausgeschlossen. Die Masse wird bis zu etwa 4/5 der Backform eingefüllt. Da gerührte und aufgeschlagene Massen in Gegensatz zu Mikroorganismen getriebenen, gegarten Teigen nicht mehr garen müssen, wird die endgültige Abdeckung der Backform gleich nach dem Einfüllen der Masse und noch vor dem Einleiten des Backvorganges so angebracht, daß zunächst keine dichtende Verbindung entsteht. Der Deckel sitzt nur lose auf, dichtet jedoch nicht ab. Dies wird durch Umbördeln des Deckelrandes erreicht. Da der Deckel jedoch einen entsprechenden Wulst der Backform hintergreift, ist sichergestellt, daß der Deckel nur mehr gegen einen gewissen Widerstand abgehoben werden kann. Während des Backvorganges entweichen die entstehenden Gase durch den Sitz des noch nicht dichtenden Deckels. Bei der Abkühlung im Anschluß an den Backvorgang entsteht im Inneren des Gefäßes ein Unterdruck, wodurch sich die Dichtung des Deckels an der Backform ansaugt und dicht hält. Auf diese Weise wird eine konservenähnliche Haltbarkeitsdauer von mindestens 12 Monaten erreicht.

### Beispiel 2

Dieses Beispiel entspricht dem Beispiel 1 mit dem Unterschied, daß ein mit einem Ventil versehenen Deckel nach dem Einfüllen der Kuchenmasse, fest auf die Backform aufgeschraubt wird, wobei eine hermetische Abdichtung erreicht wird. Im Deckel ist ein Ventil vorgesehen, das ein Entweichen von Gasen aus dem Inneren der Backform ermöglicht, jedoch ein Einströmen von Gasen ins Innere sicher verhindert.

Ein besonderer Vorteil der erfindungsgemäßen Backform ist es, daß diese aufgrund ihrer Beschaffenheit in einem Pfandsystem verwendet werden kann, da durch eine entsprechend robuste Ausführung eine oftmalige Verwendung gesichert ist. Auf diese Weise trägt die Backform den Forderungen nach Umweltschutz und Müllvermeidung Rechnung.

Im folgenden wird die Erfindung von in den Figuren dargestellten Ausführungsbeispielen naher erläutert.

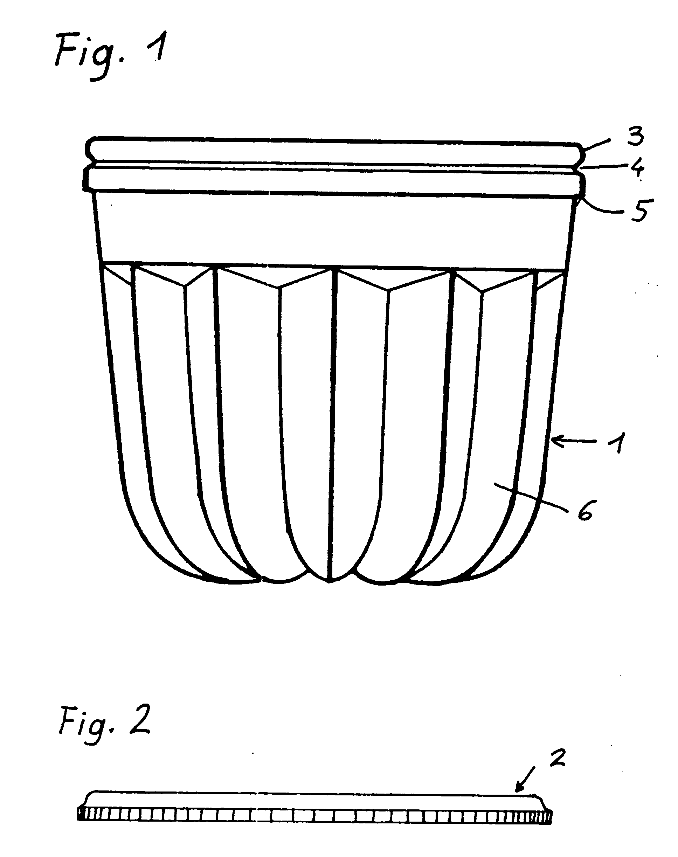

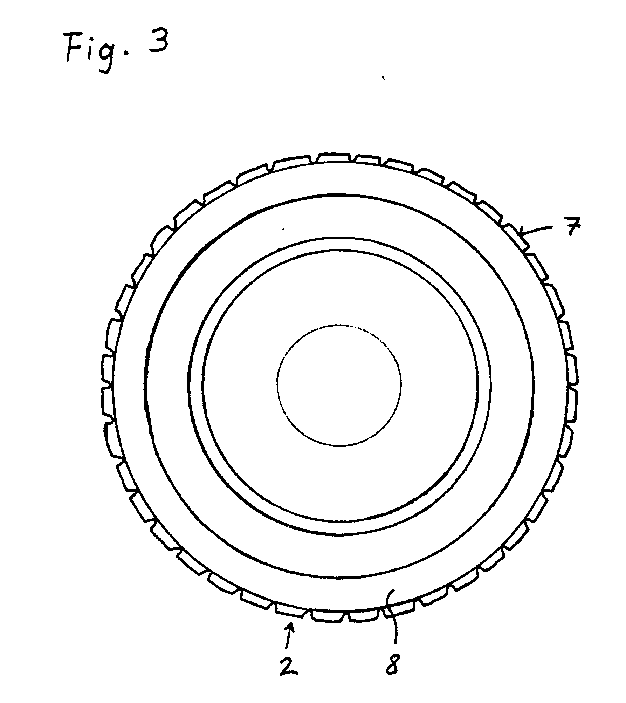

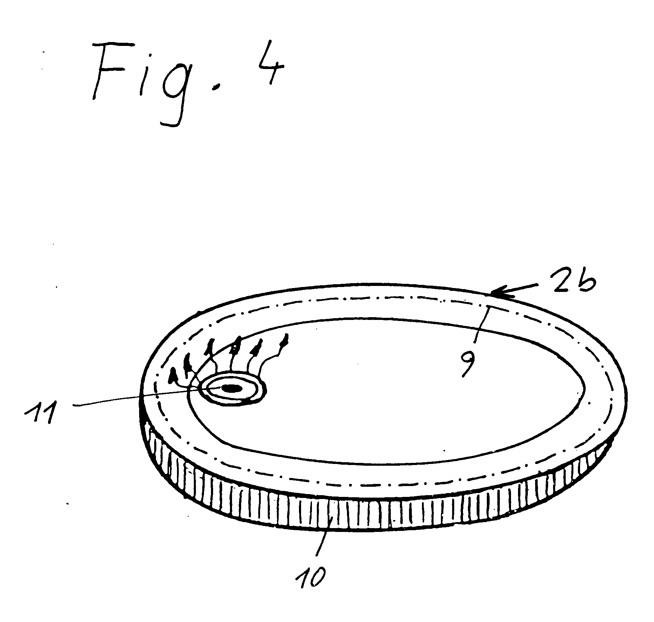

Die Figuren zeigen: die Figur 1 eine erfindungsgemäße Backform in einer Seitenansicht, Figur 2 die Seitenansicht eines Deckels zu der Backform nach Figur 1, die Figur 3 eine Ansicht des Deckels von Figur 2 von unten und die Figur 4 eine schematische Ansicht eines Deckels in einer anderen Ausführungsvariante.

Die Backform 1 weist an ihrem oberen Rand einen Wulst 3 auf, sodaß unterhalb des Wulstes 3 eine Nut 4 gebildet wird. In diese Nut 4 rastet der Deckel 2 zum vorläufigen Verschluß ein. Unterhalb der Nut 4 ist eine Schulter 5 vorgesehen, um die Backform 1 in eine entsprechende Ausnehmung einer Platte einsetzen zu können. Im unteren Bereich weist die Backform 1 die typische durch Rippen 6 gebildete Gugelhupfform auf. Die Rippen 6 sind nach unten hin und gegen die Mitte zu eingezogen.

Der Deckel 2 besitzt einen geriffelten Rand 7 und einen heiß aufgebrachten Dichtungscompoundring 8, unmittelbar innerhalb des Randes.

Der in Fig. 4 dargestellte Deckel 2b weist einen Schraubverschluß 9 sowie einen geriffelten Rand 10 auf. Ein Ventil 11 läßt Gase nach außen entweichen, sperrt jedoch in Gegenrichtung.

## Patentansprüche

1. Verfahren zur Herstellung von haltbaren Backwaren aus einer gerührten oder aufgeschlagenen Kuchenmasse, bei dem eine Backform (1) aus Glas oder Keramik mit der Masse zu etwa 80 % gefüllt wird, darauf die Backform (1) mit einem Deckel verschlossen wird, die Masse sodann einer Erwärmung unterzogen wird, wobei die dabei entstehenden Gase entweichen gelassen werden, darauf die Masse abkühlen gelassen wird, wobei im Inneren der Backform (1) ein Unterdruck entsteht, wobei der gesamte Vorgang des Erwärmens bei verschlossenem Deckel (2) erfolgt, und der Unterdruck durch die Abkühlung des Backgutes entsteht, wodurch ohne weiteres Zutun ein luftdichter Verschluß des Deckels (2) erzielt wird und wobei durch die Rezeptur der Backwaren und die Dauer und Temperatur der Erwärmung die Wasseraktivität des fertigen Produktes auf einem Wert zwischen 0,5 und 0,9, vorzugsweise zwischen 0,75 und 0,85 gehalten wird.

2. Verfahren nach Anspruch 1, dadurch gekennzeichnet, daß die verwendete Backform (1) ein Verhältnis von Volumen zu Oberfläche von 0,75 bis 2,5 cm und vorzugsweise von 1 bis 1,5 cm aufweist.

3. Verfahren nach einem der Ansprüche 1 oder 2, dadurch gekennzeichnet, daß die Erwärmung auf eine maximale Temperatur von 150°C bis 200°C erfolgt und 35 bis 70 Minuten dauert.

4. Verfahren nach einem der Ansprüche 1 bis 3, dadurch gekennzeichnet, daß die Kuchenmasse frei von Konservierungsmitteln ist.

5. Backform mit Kuchenmasse zur Durchführung eines Verfahrens nach einem der Ansprüche 1 bis 4, dadurch gekennzeichnet, daß der Deckel (2) nach dem Befüllen der Form mit Kuchenmasse so um einen Wulst (3) der Backform (1) umgebördelt und verschlossen ist, daß die in der Form vorhandene Luft und die entstehenden Gase und Dämpfe entweichen können und daß er einen Elastomer-Dichtungsring (8) aufweist.

6. Backform nach Anspruch 5 zur Durchführung eines Verfahrens nach einem der Ansprüche 1 bis 4, dadurch gekennzeichnet, daß der Deckel (2) ein Rückschlagventil (11) trägt, das nach außen hin öffnet.

7. Backform nach einem der Ansprüche 5 bis 6, dadurch gekennzeichnet, daß unterhalb des Wulstes (3) eine Schulter (5) vorgesehen ist, sodaß die Backform (1) in einer passenden Öffnung gehalten werden kann.

8. Backform nach einem der Ansprüche 5 bis 7, dadurch gekennzeichnet, daß als Werkstoff ein recyclingfähiges Glas mit einem niedrigen Borgehalt vorgesehen ist.

9. Verwendung einer Backform (1) aus einem hitzebeständigen Glas nach einem der Ansprüche 5 bis 8 als als Transport- und Verkaufsbehälter, wobei die Backform (1) einer Wiederverwendung, vorzugsweise im Pfandsystem unterzogen werden kann.

## Claims

1. Procedure for the production of durable baker's ware, pastry, made of a stirred or whipped cake mixture in which 80% of the volume of a pastry mould made of glass or ceramics is filled with the cake mixture; the pastry mould is covered with a lid, then the cake mixture is heated in such a way that the gases thus produced may escape; the cake mixture thereupon is given time to cool, thus causing low pressure (vacuum) inside the pastry mould; during the procedure of heating the lid remain closed, consequently causing low pressure during the precess of cooling of the cake mixture, thus hermetically sealing the lid; the recipe of the bakers's ware as well as the duration and the temperature of the process of heating provide for a wateractivity of the final product ranging from 0.5 to 0.9, prefereably from 0.75 to 0.85 (aW).

2. Procedure according to patent claim 1 is characterised by the fact that the pastry mould used has a volume to surface ratio of 0.75 to 2.5 cm , preferably from 1 to 1.5 cm.

3. Procedure according to either patent claim 1 or 2 is characterised by the fact that the maximum heating temperature ranges from 150 ° C up to 200 ° C over a period of time of 35 to 70 minutes.

4. Procedure according to any of the patent claims 1 to 3 is characterised by the fact that the cake mixture is free of preservatives.

5. The pastry mould holding the cake mixture produced according to patent claims 1 to 4 ( production of a cake mixture in a pastry mould) is characterised by the fact that the lid is flanged over the rim of the pastry mould after the mould has been filled with the cake mixture and then the lid is closed in such a way that the air as well as the gases and vapours produced during the process of heating may escape; the pastry mould also has to have an 'Elastomer' sealing-ring.

6. The pastry mould according to patent claim 5 used in any of the procedures according to patent claims 1 to 4 is characterised by the fact that the lid includes a check valve which opens to the outside.

7. The pastry mould according to either patent claim 5 or 6 is characterised by the fact that a *ledge* is provided beneath the rim in such a way that the pastry mould can be held in a corresponding opening.

8. The pastry mould according to any of the patent claims 5 to 7 is characterised by the fact that it has been made of recyclable glass having a low content of boron.

9. According to any of the patent claims 5 to 8 a pastry mould made of heat resistant glass is used to transport and sell the final product. The pastry mould may be recycled, preferably in the form of a mortgage.

## Revendications

1. Méthode de fabrication de pâtisserie de longue conservation à partir d'une pâte pétrie ou battue. Pour cela, on utilise un moule en verre ou en céramique rempli à 80% par cette pâte, fermé par un couvercle; puis, la pâte est soumise à un réchauffement. On laisse les gaz qui en résultent se dégager.
La pâte est ensuite refroidie, ce qui a pour résultat une dépression à l'intérieur du moule.
Le processus de réchauffement se déroule couvercle fermé et la dépression résulte du refroidissement de la pâte. On obtient de cette façon une fermeture hermétique du couvercle. Selon la recette de la pâtisserie,la durée et la température de réchauffement,l'activité de l'eau du produit fini est maintenue à une valeur comprise entre 0.5 et 0.9, de préférence entre 0.75 et 0.85.

2. Le procédé selon le point 1, ainsi caractérisé, que le moule utilisé montre une relation entre le volume et la surface de 0.75 à 2.5 cm et de préférence 1 à 1.5 cm.

3. Le procédé, d'après les points 1 ou 2, ainsi caractérisé, que le réchauffement s'ensuit à une température d'au maximum 150 à 200 C et dure entre 35 et 70 minutes.

4. Le procédé, d'après les points 1 à 3, ainsi caractérisé, que la pâte ne contient pas de produit de conservation.

5. Le moule contenant la pâte pour la réalisation d'un procédé d'après un des points de 1 à 4, ainsi caractérisé, que le couvercle, après qu'on a rempli le moule avec la pâte autour du renflement du moule, est fermé hermétiquement et fermé de sorte que l'air présent dans le moule ainsi que les gaz et les vapeurs qui se produisent, peuvent s'échapper et que le couvercle possède un anneau de joint elastomer.

6. Le moule selon le point 5 pour la réalisation d'un procédé selon un des points 1 à 4, ainsi caractérisé, que le couvercle possède une soupape qui s'ouvre vers l'extérieur.

7. Le moule, selon un des points 5 à 6, ainsi caractérisé, qu'en bas du renflement est prévu un rebord qui permet des maintenir une ouverture de moule appropriée.

8. Le moule, d'après un des points 5 à 7, ainsi caractérisé, que, comme matériau, un verre recyclable contenant un peu de bore est prévu.

9. Utilisation d'un moule en verre résistant à la chaleur selon un des points 5 à 8 comme récipient de transport et de vente. Le moule peut étre réutilisé et de préférence par un système de consigne.
